# FASCICULE DE BREVET EUROPEEN

(11) **EP 1 054 279 B1**
(45) Date de publication et mention de la délivrance du brevet: **18.10.2006**
(21) Numéro de dépôt: 00401365.2
(22) Date de dépôt: 18.05.2000
(51) Int. Cl.: G02B 6/44

(54) **Boîtier d'accès à une ou plusieurs fibres optiques dans un câble tendu**
Zugangsmuffe für ein oder mehrere optische Fasern in einem gespannten Kabel
Access box for one or more optical fibres in a stressed cable

(30) Priorité: 19.05.1999 FR 9906360
(43) Date de publication de la demande: 22.11.2000
(73) Titulaire: FRANCE TELECOM, 75015 Paris (FR)
(72) Inventeur: Crespel, Daniel, 94230 Cachan (FR); Le Bras, Daniel, 94230 Cachan (FR)
(74) Mandataire: Ballot, Paul Denis Jacques

(56) Documents cités:
- EP-A- 0 803 753
- EP-A- 0 936 486
- WO-A-97/42694
- DE-A- 3 235 723
- DE-A- 4 029 857
- DE-A- 4 116 972
- DE-A- 4 214 377
- US-A- 5 335 304

## Description

La présente invention concerne un boîtier d'accès à une ou plusieurs fibres optiques dans un câble tendu.

Un tel boîtier permet d'une part d'effectuer un piquage de fibres optiques en passage et d'autre part de modifier la configuration d'un réseau de distribution de fibres optiques dans une infrastructure d'immeubles.

La présente invention s'applique particulièrement dans le domaine de la création de réseaux de télécommunication à partir de fibres optiques dans les architectures d'immeubles, groupes de bâtiments et autres sites de clientèle d'affaire.

L'architecture du câblage d'immeubles est généralement arborescente et sans sécurisation.

En effet, une telle architecture du type arborescente utilise généralement des câbles cuivres ou optiques pour le passage des fibres sur des chemins allant de point à point. Tous ces câbles partent d'un point de départ donné pour réaliser une distribution vers une pluralité de points d'arrivé. Une telle infrastructure est évidemment extrêmement vulnérable en cas de rupture accidentelle d'un câble.

Il est cependant possible de réaliser une autre architecture qui assure la sécurisation du réseau, en utilisant la technique du piquage sur un parcours de câbles en boucles.

D'une manière générale, le piquage est une opération consistant à dériver un ou plusieurs fils ou une ou plusieurs fibres d'un câble passant pour les connecter à un autre câble.

La technique du piquage est une technique relativement récente pour les câbles à fibres optiques qui consiste à venir interrompre la ou les fibres optiques à dériver pour la ou les raccorder à d'autres fibres d'un autre câble, dit câble de dérivation.

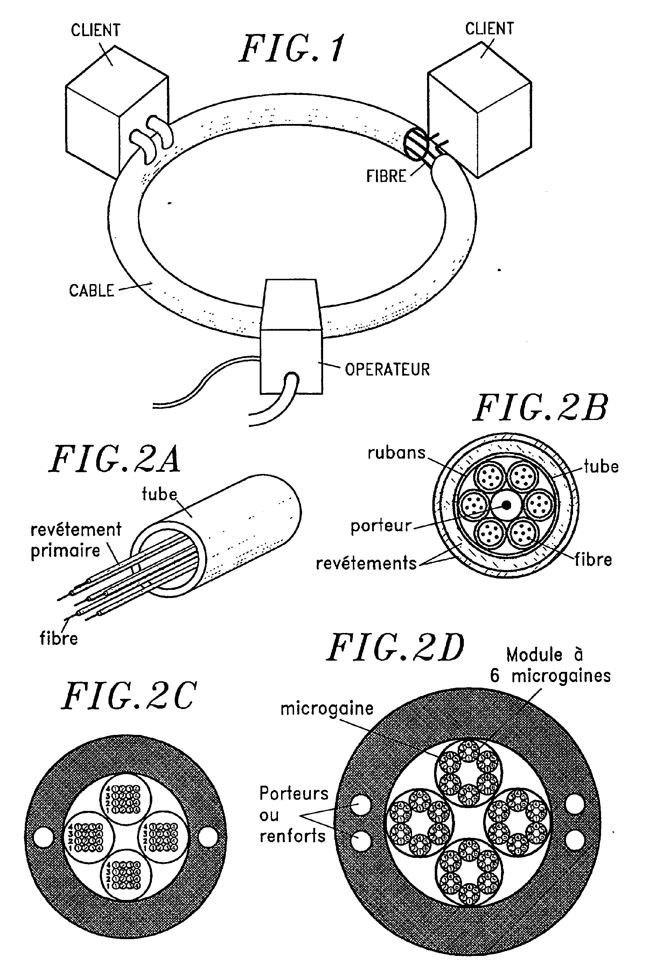

Cette technique a été développée par le déposant avec le développement des Réseaux Optiques Flexibles (ROF). On pourra se reporter au schéma de la figure 1 qui illustre le principe du piquage sur un tel réseau.

Afin de mieux comprendre l'invention, on rappelle tout d'abord l'évolution de structure des câbles optiques actuellement disponibles.

Les premiers câbles spécialement conçus pour la réalisation de réseaux interurbains sont des câbles à joncs rainurés.

Afin de mieux protéger la fibre, mais aussi afin de la conditionner, la technique du câble à tubes a ensuite été développée. Les tubes remplacent les rainures pour protéger plus efficacement les fibres.

Le procédé de fabrication des câbles à tubes est plus avantageux et moins coûteux que celui des câbles rainurés. Une illustration de ces câbles est donnée sur les figures 2A et 2B, représentant respectivement une vue en perspective et une vue en coupe.

Ces câbles ont été utilisés pour la réalisation de liaisons inter-centraux. Ils étaient raccordés aux deux bouts et le plus souvent utilisés sur de grandes distances (raccordements de ville à ville, création de réseaux dits nationaux).

Dans la suite, une nouvelle approche de la distribution a été envisagée pour la réalisation de réseaux en zone urbaine qui a conduit aux Réseaux Optiques Flexibles (ROF).

Ces réseaux en boucles, donc sécurisés par un retour sur un parcours différent, permettent une fiabilité plus grande. Ils sont utilisés pour le raccordement des grands comptes comme des banques par exemple.

Le raccordement de clientèle d'affaire s'est développé très récemment, le plus souvent dans les zones urbaines, avec l'utilisation de la technique du piquage.

Une évolution liée à la maîtrise des techniques de fabrication et à la baisse des coûts a engendré deux concepts de câbles dits câbles unitubulaires ou de distribution. Ces câbles présentent des caractéristiques optiques sensiblement égales aux câbles de réseaux interurbains, mais avec une réduction de poids (poids divisé par 2 pour un même diamètre) et une augmentation du nombre de fibres (4 à 5 fois plus de fibres).

De tels câbles sont illustrés par des vues en coupe sur les figures 2C et 2D.

Contrairement aux câbles de transport interurbains, la structure des câbles unitubulaires se caractérise, pour des câbles pouvant contenir jusqu'à 288 fibres, par un tube épais en polyéthylène haute densité dans lequel deux ou quatre porteurs sont placés diamétralement. Ces porteurs, en composite de fibre de verre ou de mèche aramide, ont un rôle de stabilité du matériau. Leur bonne tenue à la traction, mais aussi à la compression, facilite la pose.

Les fibres optiques sont enveloppées par groupes dans des modules souples.

Le conditionnement des fibres formant les câbles unitubulaires aboutit à deux types de modules optiques à savoir: les fibres en ruban et les fibres en enveloppe souple.
- Les fibres en ruban ou fibres en nappe dont une illustration est donnée à la figure 2C, sont conditionnées côte à côte dans une enveloppe polymérisée. Ce conditionnement, réalisé en usine, facilite le raccordement de masse.
- Les fibres en enveloppe souple conditionnées en vrac, communément appelées micro-gaines sont illustrées par le schéma de la figure 2D. Ces fibres sont libres dans cette enveloppe colorée. L'association de plusieurs enveloppes est proche de l'état de l'art d'un câble cuivre. Le repérage par des couleurs permet d'identifier un module en extrémité mais aussi en section de câble.

Il existe classiquement deux types de raccordement des fibres optiques.

Un premier type de raccordement consiste à réaliser une épissure par fusion ou soudure ou par des moyens mécaniques. Les coeurs optiques sont alignés et les fibres optiques peuvent être placées dans des supports en V ou dans des férules. Ce type de raccordement se caractérise par le fait qu'il n'est pas démontable.

Le second type de raccordement consiste à utiliser de la connectique. Les fibres optiques sont maintenues dans des dispositifs démontables qui sont alignés de manière à aligner les coeurs des fibres.

Un raccordement par épissure nécessite de prévoir une surlongueur de câble afin de pouvoir couper l'épissure et modifier le raccordement.

L'introduction du piquage dans le réseau s'est faite avec l'utilisation de boîtiers conçus pour des réseaux nationaux. De tels boîtiers ont comme rôle d'assurer la continuité, mécanique et optique, du câble dans les zones de raccordement. Il existe différents types de boîtiers.

Les boîtiers embases permettent l'introduction de câbles dans des tubulures. Les fibres optiques sont organisées à l'intérieur du boîtier et un dôme ou une coiffe protège l'ensemble. Ces boîtiers sont de culture anglo-saxonne.

Les boîtiers en auges (ou en barquettes) sont souvent de forme prismatique. Des passages de câbles sont disposés en opposition. Dans la continuité du passage de câble, un amarrage permet de reprendre tous les porteurs du câble. Il y a donc autant d'amarrages que de câbles.

Ces câbles peuvent entrer d'un côté ou de l'autre du boîtier par divers tubulures ou passages étanches. Le passage des câbles se situe dans le plan de joint du boîtier. Il est donc nécessaire de refermer tout le boîtier et d'utiliser le plus souvent des résines pour l'étanchéité. L'accès aux fibres n'est possible que par le démontage total du boîtier et l'ouverture du plan de joint.

Les deux bouts de câbles rentrent dans le boîtier, dans un espace largement dimensionné, et le faisceau de fibres est lové dans des cassettes ou plateaux disposés dans le boîtier.

Un tel boîtier, conçu pour être utilisé en ligne avec une surlongueur de câble des deux côtés, est de plus en plus souvent utilisé en épi, c'est-à-dire que les câbles ne rentrent que d'un côté.

DE 4 214 377 divulgue un manchon de dérivation (i.e. de piquage, pas de brassage) pour câbles à fibres optiques composé d'un support, de corps d'entrée frontaux et d'un tube rétractable. Le tube rétractable permet en particulier d'assurer l'étanchéité du manchon de dérivation.

Afin d'adapter le piquage aux structures plus récentes de câbles, deux autres boîtiers ont été décrits:
Un boîtier qui a fait l'objet d'un dépôt de brevet N° FR 96 07887 se caractérise par une forme ronde. La surlongueur de câble est enroulée sur le périmètre, ce qui permet de différer le raccordement en dehors de la chambre de tirage. Ce boîtier est évolutif par assemblage d'une ou plusieurs embases.

Un tel boîtier a comme inconvénient premier de ne pas être industrialisé. Il est conçu pour le piquage sur des câbles souples pour pouvoir être enroulés. La réduction du volume de l'amarrage et l'intégration à l'étanchéité sont intéressantes mais coûteuses. De plus, il est nécessaire d'avoir des cavités d'accueil pour les amarrages.

Un autre boîtier de piquage, présentant une forme de barquette selon la description précédente, est composé de deux éléments symétriques. Ce boîtier est intéressant par la réduction du volume, mais aussi par l'utilisation d'étanchéité mécanique qu'il présente. Il s'agit en pratique d'une évolution des boîtiers en barquette décrits précédemment et présente les mêmes inconvénients.

En effet, il comprend des amarrages encombrants, des structures de lovage non justifiées puisque, dans le cas du piquage, seulement quelques fibres sont à organiser. La structure porteuse du câble est découpée et reconstituée par l'amarrage dans le boîtier, ce qui génère des opérations longues.

La zone de lovage ou d'accès à la fibre ne facilite pas l'ergonomie du raccordement. En effet, dans le cas du piquage, il est souhaitable de disposer d'une longueur d'au moins 80 cm (40 cm de chaque côté).

En résumé, les boîtiers existant doivent nécessairement reconstituer les éléments mécaniques du câble après les avoir découpés. L' opération d'ancrage génère des dispositifs volumineux et coûteux et entraîne une complexité dans la conception des boîtiers.

La plupart des boîtiers existants sur le marché ne permettent pas de réaliser le piquage d'une fibre optique en passage dans un câble tendu.

De plus, les boîtiers de piquage existant utilisent des raccordements par épissures des fibres dérivées. Il en résulte d'une part l'abandon de fibres mortes dans le réseau, et d'autre part l'impossibilité de modifier ces raccordements.

En outre, il n'existe aucun boîtier d'accès permettant de modifier la configuration du réseau de fibres après installation de l'infrastructure du réseau puisque tous les raccordements sont réalisés par soudure, et que l'ergonomie du boîtier ne le permet pas.

La présente invention a pour but de remédier aux inconvénients de l'art antérieur.

A cet effet, la présente invention propose un boîtier d'accès comportant une zone de connectique permettant le brassage et/ou le piquage d'une pluralité de fibres optiques.

L'accès à la zone de connectique est en outre possible à tout moment, pendant la pose du câble et ultérieurement.

La présente invention a plus particulièrement pour objet un boîtier d'accès à une ou plusieurs fibres optiques dans un câble tendu, caractérisé en ce qu'il comporte un profilé intégrant le câble en passage, et présentant une zone centrale de connectique délimitée par deux embases de connexion sur lesquelles sont connectées une pluralité de fibres optiques rompues, ladite zone de connectique présentant une pluralité de mini-câbles assurant le brassage des fibres optiques rompues et/ou une pluralité de câbles de dérivation assurant le piquage des fibres optiques rompues.

Selon une caractéristique, le boîtier comprend en outre des zones d'ancrage situées à chaque extrémité du profilé, chaque zone d'ancrage comportant un écarteur permettant l'accès aux fibres optiques du câble.

Selon une particularité de l'invention, la gaine du câble est découpée axialement en deux demi-gaines de manière à libérer les fibres optiques, chaque écarteur présentant deux cavités latérales de passage des demi-gaines et une cavité centrale de passage des fibres optiques libérées.

Chaque zone d'ancrage comporte un capot d'ancrage.

Selon une autre caractéristique, le boîtier comprend en outre une zone de passage des fibres optiques non rompues, située sous la zone de connectique.

La zone de passage comporte un capot de module optique.

La zone de connectique comporte un capot de connectique, ledit capot étant amovible.

Selon une autre caractéristique, le boîtier comprend en outre deux zones de lovage encadrant la zone de connectique et apte à recevoir les fibres optiques rompues.

Chaque zone de lovage défini un volume délimité par chaque embase de connexion et par des joues fixées de part et d'autre du profilé.

Chaque zone de lovage comporte un capot de sécurité.

Selon une particularité, chaque joue comporte une première rainure, à l'intérieur de sa partie supérieure, apte à coopérer avec le capot de sécurité.

Selon une autre particularité, l'écartement entre les joues est maintenu par une ou plusieurs entretoises.

Selon une autre caractéristique, le boîtier comporte en outre un capot de dérivation couvrant les câbles dérivés entre la zone de connectique et l'extrémité du profilé.

Selon une particularité, chaque joue comporte une seconde rainure au dessus de la première, apte à coopérer avec le capot de dérivation.

Selon une autre caractéristique, le profilé, en coupe, présente la forme d'un U partiellement refermé pour former une glissière.

Le boîtier selon l'invention présente l'avantage de reconstituer la protection du câble dans la zone d'intervention avec la suppression des inconvénients des techniques antérieures, en particulier l'intégrité de la gaine du câble est conservée.

En effet, les zones d'ancrage permettent de conserver la gaine du câble après découpe de cette dernière en deux demi-gaines qui traversent le boîtier d'accès selon l'invention sans rupture et sans gêner l'accès aux fibres.

L'invention permet en outre une conservation des fibres optiques en continuité et une hiérarchie limitée des fibres dérivées sans dispositif d'organisation et de gestion.

Aucun tronçon de fibre optique n'est abandonné dans le réseau après dérivation d'une fibre optique.

L'invention peut être utilisée dans des gaines techniques (chemins de câbles verticaux ou horizontaux) compte tenu de la faible section de ce boîtier dont l'axe est confondu avec celui du câble.

De plus, ces boîtiers d'accès ne nécessitent pas de sur-longueurs coûteuses difficiles à gérer et à exploiter.

D'autres particularités et avantages de l'invention apparaîtront à la lecture de la description donnée à titre d'exemple illustratif et non limitatif et faite en référence aux figures annexées qui représentent :
- la figure 1, déjà décrite, est un schéma illustrant le principe du piquage sur un câble en passage ;
- les figures 2A et 2B, déjà décrites, représentent différentes structures de câbles unitubulaires antérieurs ;
- les figures 2C et 2D, déjà décrites, représentent des structures de câbles unitubulaires avec des modules de fibres respectivement en rubans et en micro-gaines ;
- la figure 3 est un schéma en perspective du boîtier d'accès selon l'invention, dépouillé de ses capots de protection ;
- la figure 4 est un schéma détaillé de la zone d'ancrage du boîtier selon l'invention ;
- la figure 5 est un schéma détaillé de la zone de lovage des fibres dans le boîtier selon la présente invention ;
- la figure 6 est un schéma en perspective du boîtier selon l'invention ;
- les figures 7A et 7B sont des schéma des branchements dans la zone de connectique ;
- la figure 8 est un schéma en perspective du boîtier d'accès selon l'invention, illustrant l'encastrement des capots de protection ;
- la figure 9 est un schéma en perspective du boîtier d'accès selon l'invention, avec les capots de protection en place et des fibres dérivées ;
- la figure 10 est un schéma en perspective du boîtier d'accès selon l'invention, tel qu'il se présente sur site.

Le boîtier selon la présente invention permet d'accéder à une ou plusieurs fibres optiques 23 dans un câble 2 tendu.

Un tel câble 2 parcourt un chemin dans un immeuble ou sur un site industriel. Il est ouvert sur une longueur d'environ un mètre à divers endroits proches des besoins des clients ou des équipements.

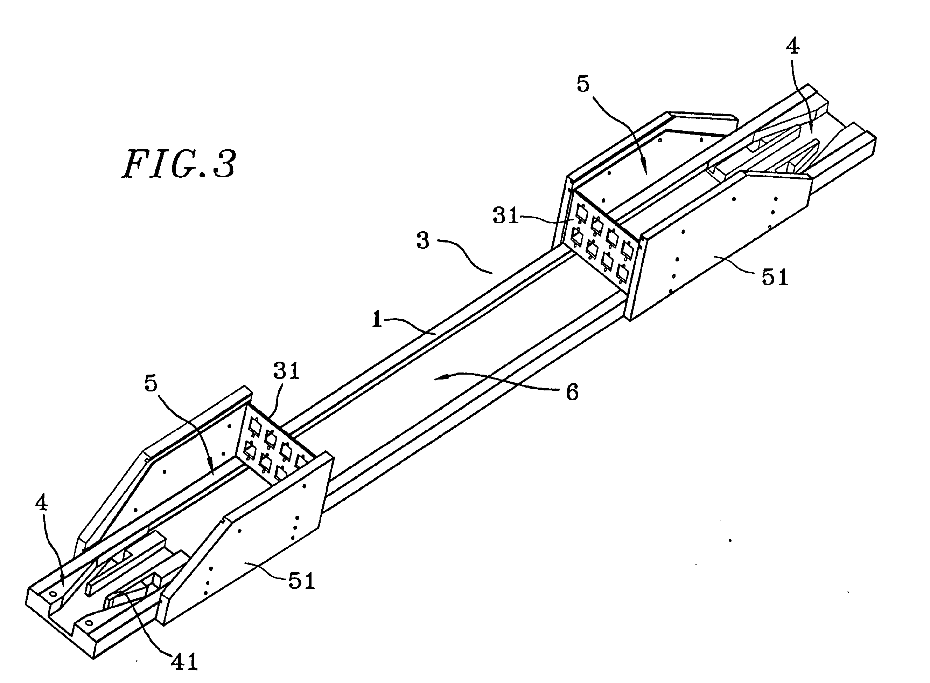

En se référant à la figure 3, le boîtier d'accès selon la présente invention est constitué par un profilé 1 et se décompose essentiellement en trois zones, une zone de connectique 3, encadrée par deux zones de lovage 5, et deux zones d'ancrage 4 situées à chaque extrémité du profilé 1.

Le profilé 1 présente, en coupe, la forme d'un U partiellement refermé de manière à constituer une glissière. Il s'étend sur une longueur d'environ un mètre.

La zone de connectique 3 est délimitée par deux embases de connexion 31. Les dessins et la description feront référence à des embases de huit connecteurs, ce qui représente le mode d'utilisation préférentiel du boîtier selon l'invention. Il est néanmoins possible d'appliquer les mêmes caractéristiques à des boîtiers comprenant des embases de plus ou moins huit connecteurs.

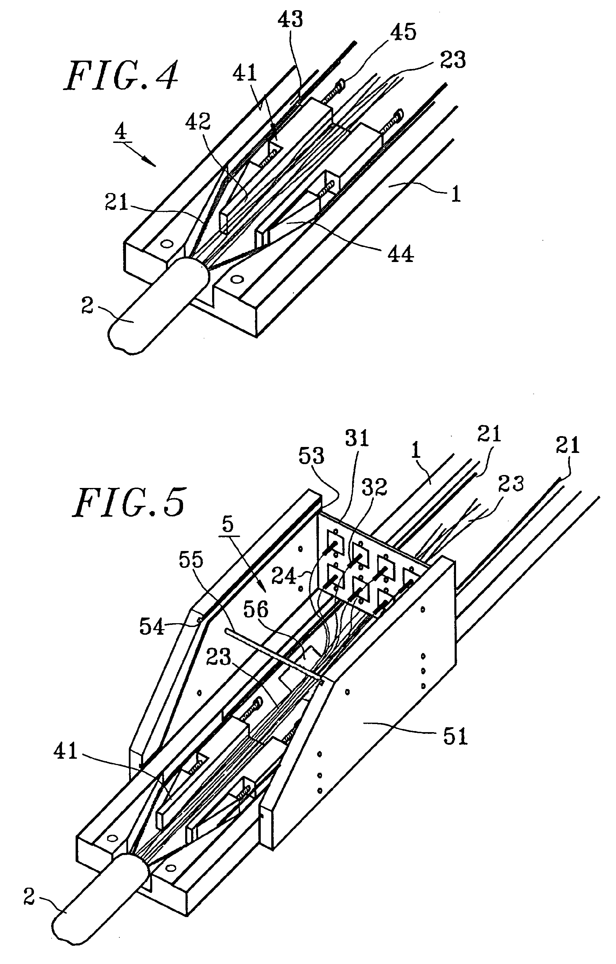

Les zones d'ancrage 4 comprennent chacune un écarteur 41 dont la fonction et les particularités seront décrites dans la suite, en référence à la figure 4.

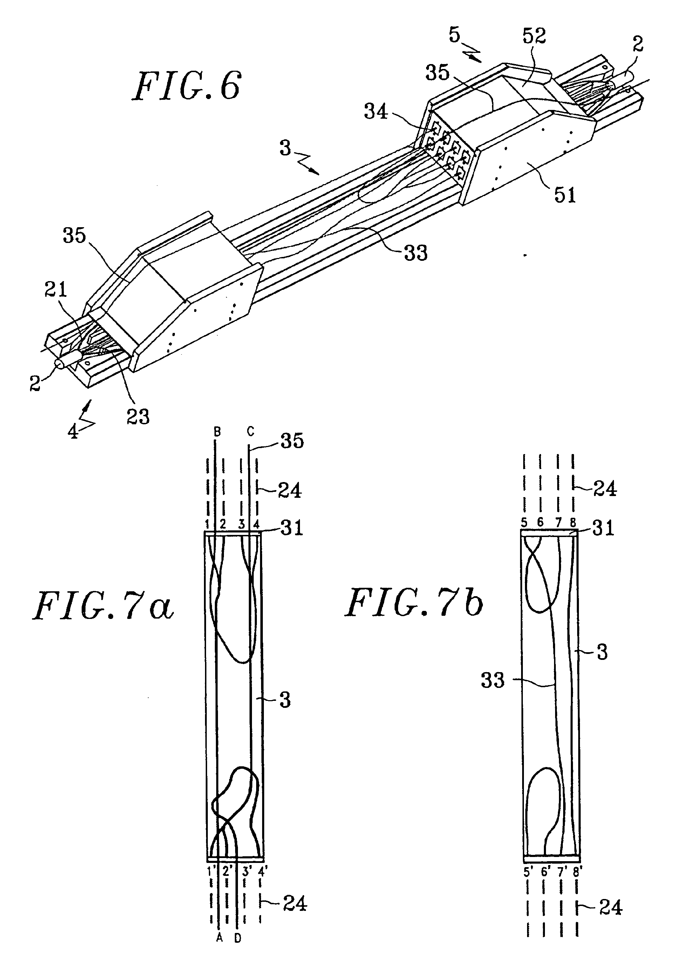

Les zones de lovage 5 sont situées entre les zones d'ancrage 4 et la zone de connectique 3. Elles définissent chacune un volume délimité par des joues 51 fixées sur les bords du profilé 1 et les embases de connexion 31. Leur fonction et leurs particularités seront décrites dans la suite, en référence à la figure 5.

Une zone de passage 6 est située sous la zone de connectique 3, dans la glissière du profilé 1.

Les fibres optiques 23 traversent le boîtier d'accès, pour la plupart en continuité dans la zone de passage 6. Certaines sont repérées et dérivées pour des besoins de raccordement. Elles sont donc rompues dans leur milieu et des connecteurs sont montés in situ et assemblés sur les embases de connexion 31.

A l'arrière des connecteurs, on dispose d'une surlongueur de fibre d'environ 40 cm pour la connexion. Les fibres optiques dénudées et connectées sont lovées dans les zones de lovage 5 de part et d'autre des embases de connexion 31.

La figure 4 illustre en détail une zone d'ancrage 4 du boîtier selon l'invention.

La zone d'ancrage 4 présente une double fonction. D'une part, elle maintient le câble 2 et d'autre part elle centre les fibres optiques 23 dans le boîtier.

Plus particulièrement, après préparation de dénudage, la gaine du câble 2 est découpée axialement en deux demi-gaines 21 de manière à libérer les fibres optiques 23. Cette découpe axiale est effectuée sans destruction des porteurs par un outillage adapté.

La zone d'ancrage 4 comporte un écarteur 41 qui présente une cavité centrale 42 de passage des fibres optiques 23 et deux cavités 43 symétriques de passage des demi-gaines 21.

L'écarteur 41 permet d'une part de fixer le câble 2 et plus particulièrement les demi-gaines 21 du câble 2 afin de maintenir ce dernier lorsque le boîtier selon l'invention est utilisé en position verticale, et d'autre part de maintenir les demi-gaines 21 écartées afin de faciliter l'accès aux fibres optiques 23.

Selon un mode de réalisation préférentiel, l'écarteur 41 comprend des coins 44 faisant saillis vers les bords du profilé 1, dans les cavités 43 de passage des demi-gaines 21. Ces coins 44 permettent avantageusement de pincer les demi-gaines 21 contre les bords du profilé 1 afin de les maintenir.

Préférentiellement, des vis 45 traversent l'écarteur 41 de part et d'autre de la cavité centrale 42 pour appuyer respectivement sur les coins 44 de manière à pincer les demi-gaines 21 entre les coins 44 et les bords du profilé 1.

Les zones d'ancrage 4 constituent les entrées/sorties du câble optique dans le boîtier selon l'invention. Elles sont conçues pour permettre de conserver l'intégrité du câble.

La figure 5 illustre en détail une zone de lovage 5 du boîtier selon l'invention.

Chaque zone de lovage 5 définie un volume délimité par l'embase de connexion 31 et par deux joues 51 placées de part et d'autre du profilé 1 afin de créer un espace dans lequel les fibres optiques rompues 24, libres et sans contraintes, peuvent être lovées et connectées.

En effet, les fibres optiques 23 libérées de leur gaine 21 pénètrent dans la zone de lovage 5. Certaines fibres optiques 23 sont rompues 24 de manière à être connectées sur l'embase de connexion 31 par des connecteurs 32, alors que les autres fibres optiques 23 traversent le boîtier en continuité en passage masqué.

Préférentiellement, les fibres optiques en passage 23 sont maintenues centrées dans la zone de passage 6 par des tampons élastomères 56 qui évite le glissement lorsque le boîtier est placé verticalement. Ces tampons 56 sont placés juste en arrière des écarteurs 41.

Les connecteurs 32 sont de type connu tel que des connecteurs à monter sur site , par exemple des connecteurs connus sous le nom de « optoclip », dont le montage se fait par sertissage et fracture, sans apport d'énergie extérieure.

On peut également utiliser des connecteurs avec des bouts de câbles raccordés par épissures ou « pig tail » en terminologie anglaise. Dans ce cas, les épissures sont stockées dans les zones de lovage.

Les joues 51 sont constituées par des plaques de 4 à 5 mm d'épaisseur qui comportent des rainures 53 à l'intérieur de leur partie supérieure.

L'écartement entre les joues 51, définissant le volume de lovage, est maintenu par une ou plusieurs entretoises 55.

Les joues 51 peuvent, par exemple, être vissées sur le profilé 1 ou fixées par tout autre moyen adapté.

Un capot de sécurité 52 coulisse dans les rainures 53 de manière à interdire l'accès aux fibres optiques nues 24.

Les joues 51 présentent en outre une autre rainure 54, au dessus de la rainure 53, de manière à faire coulisser un capot de dérivation 7 qui protégera les fibres optiques dérivées 35 hors de la zone de connectique.

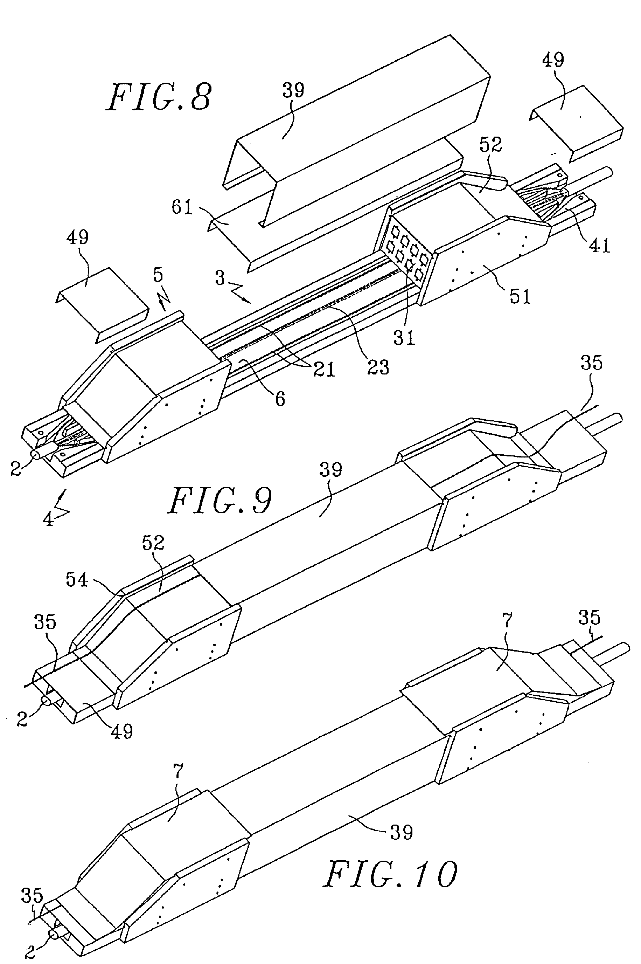

Ces capots de sécurité 52 et de dérivation 7 seront décrits plus précisément dans la suite en référence aux figures 9 et 10.

La figure 6 illustre en détail la zone de connectique 3 du boîtier selon l'invention.

La zone de connectique 3 se situe avantageusement au centre du boîtier, entre les deux embases de connexion 31, et au dessus de la zone de passage 6 en continu des fibres optiques 23 non rompues.

Une pluralité de mini-câbles 33, ou de jarretières dans le jargon des télécommunications, assurent la connectique entre les deux embases 31. Ces mini-câbles ont une longueur sensiblement égale à celle de la zone de connectique 3.

Les mini-câbles 33 sont connectés sur les embases de connexion 31 par des connecteurs 34 du même type que les connecteurs 32 utilisés de l'autre côté de l'embase 31, dans les zones de lovage 5.

En outre, un ou plusieurs câbles de dérivation 35 permettent de réaliser le piquage en ligne d'une ou plusieurs fibres optiques préalablement repérées et rompues 24. Ces câbles de dérivation 35 piquent une, deux, ou quatre fibres optiques sur une embase de connexion 31 et quitte la zone de connectique 3 en passant au dessus le capot de sécurité 52 de la zone de lovage 5.

Ces câbles de dérivation 35 ont en effet pour objectif de quitter le boîtier d'accès afin de raccorder la ou les fibres optiques dérivées sur un poste de travail ou autre lieu.

Les figures 7A et 7B illustrent différents branchements possibles dans la zone de connectique 3.

La figure 7A représente les plots de connexion du haut des embases 31, et la figure 7B les plots de connexion du bas des embases. Pour des besoins de clarté, les connexions sont dessinées quatre par quatre, mais rien n'interdit de brancher une fibre rompue 24 reliée sur le haut d'une embase avec une autre reliée sur le bas de l'autre embase.

Les figures 7A et 7B illustrent clairement les différentes possibilités de connectique offertes par le boîtier selon l'invention.

Les mini-câbles 33 permettent d'assurer la continuité de certaines fibres (8,8'), de réaliser des boucles (6,7) et (5',6'), de brasser les fibres (5,7').

Les câbles de dérivation 35 permettent de piquer une ou plusieurs fibres rompue 24. Ainsi, le câble A est une dérivation des fibres (1,2), le câble B une dérivation de (3,4), le câble C une dérivation de (1',2') et le câble D une dérivation de (3',4').

Il est évidemment possible de dériver une seule ou quatre fibres vers l'extérieur.

La figure 8 illustre le boîtier selon la présente invention avec des capots de protection sur chaque zone.

Les zones de lovage 5 sont couvertes par un capot de sécurité 52 protégeant les fibres optiques 24 rompues, dénudées et lovées. Ce capot 52 coulisse dans les rainures 53 des joues 51.

La zone de passage 6 des fibres optiques non rompues 23 se situe sous la zone de connectique 3. Les fibres optiques en passage 23 sont protégées par un capot de modules optiques 61 qui se fixe directement sur le profilé 1 entre les embases de connexion 31.

La zone de connectique 3 est quant à elle protégée par un capot de connectique 39 enfermant toute la zone à hauteur des embases de connexion 31. Ce capot est facilement amovible afin d'autoriser un accès simple à la zone de connectique 3.

En outre, les zones d'ancrage 4 sont protégées par des capots d'ancrage 49 qui recouvrent le câble 2 dénudé et écarté, ainsi que les fibres optiques 23 libérées.

Il ressort de la figure 8 qu'il est tout à fait possible d'installer le câble et le boîtier d'accès dans l'infrastructure à laquelle ils sont destinés sans réaliser la connectique au préalable.

En effet, lors de l'installation du boîtier, il suffit de rompre certaines fibres optiques et de les connecter sur les embases 31 dans les zones de lovage 5. Lorsque le besoin s'en fait sentir, il suffit alors de défaire le capot de connectique 39 pour accéder à la zone de connectique 3 pour brancher un mini-câble 33 et/ou un câble de dérivation 35.

La figure 9 illustre le boîtier d'accès selon l'invention avec les capots de protection en place.

Les câbles dérivés 35 sortent du capot de connectique 39 et passent au dessus du capot de sécurité 52 de la zone de lovage 5.

La figure 10 est un schéma du boîtier d'accès selon l'invention tel qu'il se présente sur le site.

Des capots de dérivation 7 protégent les câbles dérivés 35. Ces capots de dérivation 7 sont introduits par effet tiroir dans les rainures 54 des joues 51.

Les capots de connectique 39 et de dérivation 7 peuvent avantageusement permettrent l'identification du boîtier d'accès par une inscription prédéterminée telle qu'une marque, un numéro de série, ou tout autre identifiant.

Le boîtier d'accès selon l'invention constitue un ensemble en « kit » à monter directement sur site, composé de pièces simples à réaliser à un faible coût.

## Revendications

1. Boîtier d'accès à une ou plusieurs fibres optiques (23) d'un câble tendu (2), **caractérisé en ce qu'**il comporte :
au moins un capot, et
un profilé (1), propre à supporter le câble tendu sur son axe longitudinal,
ledit profilé comportant deux zones d'ancrage (4), chacune située à une extrémité du profilé (1), et
une zone centrale de connectique (3), délimitée par deux embases de connexion (31), lesdites embases étant situées à distance des zones d'ancrage, et étant transversales à l'axe longitudinal du profilé (1).

2. Boîtier d'accès selon la revendication 1, **caractérisé en ce que** chaque zone d'ancrage (4) comporte un écarteur (41), chaque écarteur (41) présentant deux cavités latérales (43), une cavité centrale (42), et deux coins (44) faisant saillie dans les cavités latérales (43).

3. Boîtier d'accès selon l'une quelconque des revendications précédentes, **caractérisé en ce qu'**il comprend en outre une zone de passage (6) située sous la zone de connectique (3), la zone de passage (6) comportant un capot de module optique (61).

4. Boîtier d'accès selon l'une quelconque des revendications précédentes, **caractérisé en ce que** la zone centrale de connectique (3) comporte un capot de connectique (39), ledit capot étant amovible.

5. Boîtier d'accès selon l'une quelconque des revendications précédentes, **caractérisé en ce qu'**il comprend en outre deux zones de lovage (5) encadrant la zone centrale de connectique (3), chaque zone de lovage (5) comportant un capot de sécurité (52).

6. Boîtier d'accès selon la revendication 5, **caractérisé en ce que** chaque zone de lovage (5) définit un volume délimité au moins par chaque embase de connexion (31) et par des joues (51) fixées de part et d'autre du profilé (1), chaque joue (51) comportant une première rainure (53), à l'intérieur de sa partie supérieure, apte à coopérer avec le capot de sécurité (52).

7. Boîtier d'accès selon l'une quelconques des revendications précédentes, **caractérisé en ce qu'**il comporte en outre un capot de dérivation (7) entre la zone de connectique (3) et l'extrémité du profilé (1).

8. Boîtier d'accès selon la revendication 7, **caractérisé en ce que** chaque joue (51) comporte une seconde rainure (54) au dessus de la première (53), apte à coopérer avec le capot de dérivation (7).

9. Boîtier d'accès selon l'une quelconque des revendications précédentes, **caractérisé en ce que** le profilé (1), en coupe, présente la forme d'un U partiellement refermé pour former une glissière.

10. Dispositif d'accès à une ou plusieurs fibres optiques (23) d'un câble tendu (2), comprenant le boîtier d'accès selon l'une quelconque des revendications précédentes combinée à la revendication 2, dans lequel est intégré un câble tendu (2), la gaine du câble (2) étant découpée axialement en deux demi-gaines (21) de manière à libérer les fibres optiques (23), chaque zone d'ancrage (4) comportant un écarteur (41) permettant l'accès aux fibres optiques (23) du câble (2), chaque écarteur (41) présentant deux cavités latérales (43) de passage des demi-gaines (21) et une cavité centrale (42) de passage des fibres optiques libérées (23), et au moins certaines fibres optiques sont rompues (24) et connectées sur la face externe d'au moins une embase de connexion.

11. Dispositif d'accès selon la revendication 10, dans lequel l'amarrage des demi-gaines (21) est assuré pour chaque écarteur par pincement desdites demi-gaines (21) dans les cavités latérales (43) par l'action de vis (45) sur les coins (44).

12. Dispositif d'accès selon l'une des revendications 10 ou11, dans lequel la zone de passage (6) permet le passage des fibres optiques non rompues (23).

13. Dispositif d'accès selon l'une quelconque des revendications 10 à 12, dans lequel les deux zones de lovage (5) encadrant la zone de connectique (3) sont aptes à recevoir les fibres optiques rompues (24).

14. Dispositif d'accès selon l'une quelconque des revendications 10 à 13, dans lequel une pluralité de fibres optiques (33) ou de câbles dérivés (35) situés dans la zone de connectique (3) et connectés sur la face interne d'au moins l'une des embases de connexion assurent le brassage et/ou le piquage des fibres optiques rompues (24).

15. Dispositif d'accès selon la revendication 14, dans lequel le capot de dérivation (7) couvre les câbles dérivés (35).

## Claims

1. Access case to one or more optical fibres (23) of a tight cable (2), **characterized in that** it comprises:
- at least one cover;
- a section (1), suitable for supporting the tensioned cable along its longitudinal axis, said section including two anchoring zones (4), each located at one end of the section (1); and
- a central connection zone (3), bounded by two connection bases (31), said bases being located at a certain distance from the anchoring zones and being transverse to the longitudinal axis of the section (1).

2. Access case according to Claim 1, **characterized in that** each anchoring zone (4) includes a spacer (41), each spacer (41) having two lateral cavities (43), a central cavity (42) and two wedges (44) protruding into the lateral cavities (43).

3. Access case according to either of the preceding claims, **characterized in that** it further includes a passage zone (6) located beneath the connection zone (3), the passage zone (6) having an optical module cover (61).

4. Access case according to any one of the preceding claims, **characterized in that** the central connection zone (3) includes a connection cover (39), said cover being removable.

5. Access case according to any one of the preceding claims, **characterized in that** it further includes two coiling zones (5) flanking the central connection zone (3), each coiling zone (5) having a safety cover (52).

6. Access case according to Claim 5, **characterized in that** each coiling zone (5) defines a volume bounded at least by each connection base (31) and by flanges (51) fastened on either side of the section (1), each flange (51) having a first groove (53), inside its upper portion, capable of cooperating with the safety cover (52).

7. Access case according to any one of the preceding claims, **characterized in that** it further includes a branch-off cover (7) between the connection zone (3) and the end of the section (1).

8. Access case according to Claim 7, **characterized in that** each flange (51) has a second groove (54) above the first (53), capable of cooperating with the branch-off cover (7).

9. Access case according to any one of the preceding claims, **characterized in that** the section (1), in cross-section, has the shape of a partly closed-up U in order to form a slideway.

10. Access device for access to one or more optical fibres (23) of a tight cable (22), comprising the access case according to any one of the preceding claims combined with claim 2, in which a tight cable (2) is integrated, the sheath of the cable (2) being cut axially into two half-sheaths (21) so as to free the optical fibres (23), each anchoring zone (4) including a spacer (41) allowing access to the optical fibres (23) of the cable (2), each space (41) having two lateral cavities (43) for passage of the half-sheaths (21) and a central cavity (42) for passage of the freed optical fibres (23), and at least some of the optical fibres are broken (24) and connected on the external face of at least one connection base.

11. Access device according to Claim 10, in which, for each spacer, the half-sheaths (21) are secured by the pinching of said half-sheaths (21) in the lateral cavities (43) by the action of screws (45) on the wedges (44).

12. Access device according to either of Claims 10 and 11, in which the passage zone (6) allows passage of the unbroken optical fibres (23).

13. Access case according to any one of Claims 10 to 12, in which the two coiling zones (5) flanking the connection zone (3) are capable of housing the broken optical fibres (24).

14. Access case according to any one of Claims 10 to 13, in which a plurality of optical fibres (33) or of branched-off cables (35), located in the connection zone (3) and connected to the internal face of at least one of the connection bases, ensure that the broken optical fibres (24) are cross-connected and/or tapped-off.

15. Access case according to Claim 14, in which the branch-off cover (7) covers the branched-off cables (35).

## Patentansprüche

1. Gehäuse für den Zugang zu einer oder mehreren Lichtleitfasern (23) eines gespannten Kabels (2), **dadurch gekennzeichnet, dass** es umfasst:
wenigstens eine Abdeckkappe und
ein Profilelement (1), das dafür geeignet ist, das gespannte Kabel längs seiner longitudinalen Achse zu unterstützen,
wobei das Profilelement zwei Verankerungszonen (4) aufweist, wovon sich jede an einem Ende des Profilelements (1) befindet, und
eine mittige Verbindungszone (3), die durch zwei Verbindungsgrundplatten (31) begrenzt ist, wobei sich die Grundplatten in einem Abstand von den Verankerungszonen befinden und zu der longitudinalen Achse des Profilelements (1) quer orientiert sind.

2. Zugangsgehäuse nach Anspruch 1, **dadurch gekennzeichnet, dass** jede Verankerungszone (4) einen Abstandshalter (41) umfasst, jeder zwei seitliche Hohlräume (43), einen mittigen Hohlraum (42) und zwei Keile (44), die in die seitlichen Hohlräume (43) vorstehen, aufweist.

3. Zugangsgehäuse nach einem der vorhergehenden Ansprüche, **dadurch gekennzeichnet, dass** es außerdem eine Durchgangszone (6) umfasst, die sich unter der Verbindungszone (3) befindet, wobei die Durchgangszone (6) eine Abdeckkappe (61) für optische Module aufweist.

4. Zugangsgehäuse nach einem der vorhergehenden Ansprüche, **dadurch gekennzeichnet, dass** die mittige Verbindungszone (3) eine abnehmbare Verbindungsabdeckkappe (39) aufweist.

5. Zugangsgehäuse nach einem der vorhergehenden Ansprüche, **dadurch gekennzeichnet, dass** es außerdem zwei Aufspleißzonen (5) umfasst, die die mittige Verbindungszone (3) einrahmen, wobei jede Aufspleißzone (5) eine Sicherheitsabdeckkappe (52) umfasst.

6. Zugangsgehäuse nach Anspruch 5, **dadurch gekennzeichnet, dass** jede Aufspleißzone (5) ein begrenztes Volumen wenigstens durch jede Verbindungsgrundplatte (31) und durch Seitenteile (51), die beiderseits des Profilelements (1) befestigt sind, definiert, wobei jedes Seitenteil (51) in ihrem oberen Abschnitt eine erste Nut (53) aufweist, die dafür geeignet ist, mit der Sicherheitsabdeckkappe (52) zusammenzuwirken.

7. Zugangsgehäuse nach einem der vorhergehenden Ansprüche, **dadurch gekennzeichnet, dass** es außerdem eine Abzweigabdeckkappe (7) zwischen der Verbindungszone (3) und dem Ende des Profilelements (1) aufweist.

8. Zugangsgehäuse nach Anspruch 7, **dadurch gekennzeichnet, dass** jedes Seitenteil (51) über der ersten Nut (53) eine zweite Nut (54) aufweist, die dafür geeignet ist, mit der Abzweigabdeckkappe (7) zusammenzuwirken kann.

9. Zugangsgehäuse nach einem der vorhergehenden Ansprüche, **dadurch gekennzeichnet, dass** das Profilelement (1) im Schnitt die Form eines teilweise geschlossenen U aufweist, um eine Gleitschiene zu bilden.

10. Vorrichtung für den Zugang zu einer oder mehreren Lichtleitfasern (23) eines gespannten Kabels (2), die das Zugangsgehäuse nach einem der vorhergehenden Ansprüche in Kombination mit Anspruch 2 aufweist, in die ein gespanntes Kabel (2) integriert ist, wobei die Abschirmung des Kabels (2) axial in zwei Halbabschirmungen (21) zerschnitten ist, um die Lichtleitfasern (23) freizulegen,
wobei jede Verankerungszone (4) einen Abstandshalter (41) aufweist, der den Zugang zu den Lichtleitfasern (23) des Kabels (2) ermöglicht,
wobei jeder Abstandshalter (41) zwei seitliche Hohlräume (43) für den Durchgang der Halbabschirmungen (21) und einen mittigen Hohlraum (42) für den Durchgang der freigelegten Lichtleitfasern (23) aufweist, wobei wenigstens einige Lichtleitfasern unterbrochen sind (24) und mit der Außenseite wenigstens einer Verbindungsgrundplatte verbunden sind.

11. Zugangsvorrichtung nach Anspruch 10, bei der das Festklemmen der Halbabschirmungen (21) für jeden Abstandshalter durch Einstecken der Halbabschirmungen (21) in die seitlichen Hohlräume (43) durch die Betätigung von Schrauben (45) an den Keilen (44) gewährleistet ist.

12. Zugangsvorrichtung nach einem der Ansprüche 10 oder 11, bei der die Durchgangszone (6) den Durchgang der nicht unterbrochenen Lichtleitfasern (23) ermöglicht.

13. Zugangsvorrichtung nach einem der Ansprüche 10 bis 12, bei der die zwei Aufspleißzonen (5), die die Verbindungszonen (3) einrahmen, dafür geeignet ist, die unterbrochenen Lichtleitfasern (24) aufzunehmen.

14. Zugangsvorrichtung nach einem der Ansprüche 10 bis 13, bei der mehrere Lichtleitfasern (33) oder abgezweigte Kabel (35), die sich in der Verbindungszone (3) befinden und mit der Innenfläche wenigstens einer der Verbindungsgrundplatten verbunden sind, die Vereinigung und/der das Aufspalten der unterbrochenen Lichtleitfasern (24) gewährleisten.

15. Zugangsvorrichtung nach Anspruch 14, bei der die Abzweigabdeckkappe (7) die abgezweigten Kabel (35) abdeckt.
